(19)

Europäisches
Patentamt
European
Patent Office
Office européen
des brevets

(11) **EP 4 080 459 A1**

(12) **EUROPEAN PATENT APPLICATION**

(43) Date of publication:
**26.10.2022 Bulletin 2022/43**

(21) Application number: **21170069.5**

(22) Date of filing: **23.04.2021**

(51) International Patent Classification (IPC):
***G06T 11/00*** *(2006.01)*

(52) Cooperative Patent Classification (CPC):
**G06T 11/006;** G06T 2211/424

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **SALOMON, Andre Frank
Eindhoven (NL)**

• **WUELKER, Christian
Eindhoven (NL)**
• **GOEDICKE, Andreas
Eindhoven (NL)**
• **GRASS, Michael
Eindhoven (NL)**

(74) Representative: **Philips Intellectual Property &
Standards
High Tech Campus 52
5656 AG Eindhoven (NL)**

(54) **MACHINE LEARNING-BASED IMPROVEMENT IN ITERATIVE IMAGE RECONSTRUCTION**

(57)     A system (CDD) and related method for facilitating an iterative reconstruction operation. In iterative reconstruction, imagery in image domain is reconstructed in plural steps from measured projection data in projection domain. The system and methods use a trained machine learning module (MLM). The system receives input correction data generated in the iterative reconstruction operation. The system predicts, based on the input correction data, output correction data. The output correction data is provided for facilitating correcting a current image, as reconstructed in a given step, into a new image.

FIG. 2

EP 4 080 459 A1

**Description**

FIELD OF THE INVENTION

The invention relates to a system comprising a trained machine learning module for facilitating an iterative image reconstruction operation, systems for iterative image reconstruction, to a training system for training a machine learning model, to a system for generating training data, to related methods, to a computer program element, and to a computer readable medium.

BACKGROUND OF THE INVENTION

Imaging is an important tool in the arsenal of the medical practitioner.
One such tool is X-ray imaging, which allows acquiring imagery of the internals of patients in a non-invasive manner. Patients are exposed to X-radiation from the outside. The X-radiation passes through patient tissue, and is then detected at a detector of the imaging apparatus. In this manner, projection data may be obtained. Projection data may be used as projection imagery, such as in radiography protocols. However, sometimes it is cross-sectional imagery that is more appropriate for the medical task at hand. For this purpose, the projection imagery can be computationally processed by reconstruction algorithms to obtain the said cross-sectional imagery. Cross-sectional imagery can help in diagnosis and/or in therapy by revealing details otherwise not available in projection imagery as intervening anatomies along the projection direction cause structures to superimpose in the projection imagery, thus potentially obscuring crucial details.
Cross-sectional imaging, also called tomographic imaging, is available for many modalities, such for CT (computed tomography) or mammography (both X-ray based), nuclear imaging (SPECT[single photon emission computed tomography]/PET[positron emission tomography]), MRI (Magnetic Resonance Imaging), OCT (optical coherence tomography), and US (ultrasound) tomography.
Different types of reconstruction algorithms exist, including iterative reconstruction algorithms. Iterative reconstruction algorithms include those of the algebraic or statistical type. Those of statistical type include maximum likelihood based algorithms (MLEM, "maximum likelihood expectation maximization"). Iterative reconstruction algorithms proceed in iterations to compute a sequence of intermediate images that may converge to a final result, the desired cross-sectional image. However, iterative reconstruction algorithms are not without flaws as they tend to introduce statistical noise into the reconstructed image. More specifically, statistical noise propagates into the estimated image in each iteration whilst many iterations may be needed to reach a certain level of convergence. This may consume undue time and/or computational resources.
Regularization techniques have been used in iterative reconstruction to curb noise corruption (prevalence/severity). Such regularization techniques for noise reduction included formulation of simple stopping conditions, or more advanced regularization approaches like relative-difference-priors. The stopping condition may mandate to stop iterating as soon as features of interest have converged sufficiently, while at the same time image noise has not become too dominant in masking those image features. The relative-difference-priors based regularization aimed at local smoothing of the intermediate images, depending on spatial structures. However, both techniques have been found to often lead to artificial noise textures or reduced quantitative accuracy especially for small structures.

SUMMARY OF THE INVENTION

There may therefore be a need improved tomographic imaging.
The object of the present invention is solved by the subject matter of the independent claims where further embodiments are incorporated in the dependent claims. It should be noted that the following described aspect of the invention equally the systems for iterative image reconstruction, to the training system for training the machine learning model, to the system for generating training data, to the related methods, to the computer program element, and to the computer readable medium.
According to a first aspect of the invention there is provided a system comprising a trained machine learning module for facilitating an iterative reconstruction operation, wherein, in one or more steps, imagery in image domain is reconstructable from measured projection data in projection domain, the module configured to:

receive input correction data generated in the said iterative reconstruction operation,
predict, based on the input correction data, output correction data, and to
provide the said output correction data for facilitating correcting a current image, as reconstructed in a given step, into a new image.

The said current image is either an initial image or an intermediate image generated by the iterative reconstruction in different iteration cycles.

The proposed system uses preferably iterative tomographic reconstruction algorithms. Such iterative reconstruction algorithms may be distinguished from direct inversion-type reconstruction algorithm, where the computation of the values of individual image elements (voxels or pixels) of the reconstructed image does not involve iteration. An example for a direct inversion reconstruction algorithm is the filtered back projection (FBP) algorithm.

The proposed system may use machine learning ("ML") to improve speed of convergence and/or reduce noise in iterative image reconstruction. ML is used to transform or filter the correction data rather than the intermediate images generated during execution of the iterative reconstruction algorithm.

It has been found that in iterative reconstruction, noise variance of the intermediate reconstructed images depends highly on the level of convergence and statistical noise in the acquired data. In contrast, the correction data (for example correction factors) does show a constant statistical noise level which is independent of the convergence level and iteration, but only depends on the acquired raw projection data. This discovery is leveraged herein by using ML to noise reduce the correction data rather than the intermediate images. ML has been found to capture well the relationship between different noise levels in earlier correction data as learned from training data. The training data may be sourced in its entirety from historical image patient records, or may be at least in parts generated by a training data generator TDG.

Attempting to noise reduce (also referred to as "denoising") intermediate imagery appears less promising, even when ML is used, because the ML model will need to learn to reduce a wide spectrum of noise levels, or for each iteration or for each image region a specific model matching the input noise may have to be selected and trained. Both is cumbersome and difficult to implement. In contrast, the proposed ML-based noise reduction of correction data simplifies both, training of the model and the model architecture, and on addition leads to better robustness. Applying ML-based denoising to the correction factors instead of to the intermediate images as done herein is simpler as the correction data suffers merely from iteration-independent noise.

The earlier mentioned noise regularizations techniques such as MAP (Maximum A Posteriori) reconstruction, or RDP (Relative Difference Prior), led to artificial or missing noise texture which in turn caused reduced clinical acceptance and may not allow clinical users assessing small structures (e.g. risk-assessment for false-positive lesions in PET or SPECT imaging). In contrast, the proposed solution ensures a natural look of the reconstructed images, since the noise texture only depends on the (varying) level of convergence in each region.

In embodiments, the proposed solution uses receptive fields that are larger than filtering/smoothing windows used in previous regularization approaches, such as RDP. For example, in RDP, for typical relative-difference-priors, local smoothing of each voxel only depended on the nearest neighbors, i.e., a 3x3x3 voxel neighborhood. Thus, for smaller voxels and higher statistical noise in each voxel, RDP becomes ineffective in separating noise from real, d image features structures. By using receptive field larger than the said immediate voxel neighborhood with certain ML models as used herein, even small image structures are prevented from being drowned out by noise.

In embodiments, the input correction data is in image domain, based on back-projected error projection data, the error projection data representing a deviation between measured projection data and estimated projection data, and the estimated projection data obtained by forward-projection into projection domain of the current image.

In an alternative embodiment, the input correction data is in projection domain, based on a deviation between measured projection data and estimated projection data, the estimated projection data obtained by forward-projection into projection domain of the current image reconstructed at a given iteration step.

In embodiments, the module acts as a data/image quality improver so that the new correction data has a higher quality than the input correction data. Specifically, in embodiments, the module acts as a noise reducer so that the new correction data has a lower noise level than the input correction data.

In embodiments, the quality is one of noise, and the system comprises plural such machine learning modules, configured for a respective different noise reduction level. In embodiments, the system includes a selector for receiving a selector signal to select one of the plural modules, based on a desired noise reduction level.

The selector and plural models may also be used for improving other image/data quality of the correction data, such as improving resolution or reducing artifact corruption.

In embodiments, the, or at least one of the, plural machine learning modules includes or is implemented as an artificial neural network model.

In embodiments, the artificial neural network model is a convolutional neural network.

In embodiments, the network includes at least one hidden layer.

In embodiments, the convolutional neural network has an effective receptive field larger than a neighborhood of a voxel in image domain or of a pixel in projection domain. The receptive field may be selectable/adjustable by user through a user interface. The neighborhood is preferably the immediate neighborhood of the voxel. The network can ne thus chosen to apply convolution to a larger area around the voxel, thus helping improve data/image quality, such as reduce/eliminate noise.

In embodiments, the projection data measured by an imaging apparatus, the imaging apparatus being any one of: an X-ray imaging apparatus, a PET/SPECT imaging apparatus, and an MRI imaging apparatus.

In another aspect, there is provided a system for iterative reconstruction, in one or more steps, of imagery in image domain from projection data in projection domain, comprising:

memory on which is stored a current image for a given iteration step;
a forward-projector to map the current image into projection domain to obtain estimated projection data;
a comparator configured to establish projection error data as a deviation, if any, between the projection data and the estimated projection data, and, if there is,
a back-projector to back-project the projection error data into image domain to obtain the input correction data;
a correction data determiner, implemented as a trained machine learning module as per in any one of the above mentioned embodiments, to compute, based on the input correction data, output correction image data; and
an updater configured to apply the output correction data to the current image to update the current image into the new image.

In another aspect, there is provided a system for iterative reconstruction, in one or more steps, of imagery in image domain from projection data in projection domain, comprising:

memory on which is stored a current image for a given iteration step;
a forward-projector to map the current image into projection domain to obtain estimated projection data;
a comparator configured to establish input correction data as a deviation, if any, between the projection data and the estimated projection data, and, if any,
a correction data determiner, implemented as a trained machine learning module as per any one of above mentioned embodiments, to compute, based on the input correction data, output correction data; and
a back-projector configured to back-project the output correction data into image domain to obtain correction image data; and
an updater configured to apply the correction image data to the current image to update the current image into a new image.

In the above, the trained machine learning module may be exchanged for each, at least one or some iteration steps, such as in CT. However, it also envisaged to retain the same module until conclusion of the iteration.

In another aspect there is provided a training system configured for training, based on training data, a machine learning module per any one of the embodiments or aspect mentioned above. The system implements a machine learning training algorithm.

In another aspect there is provided a system for generating training data for use in the training system, comprising an iterative reconstructor configured i) to process projection data to obtain correction image data at first and second quality (level), the second quality being higher than the first quality, the system providing the correction image data at the first and second qualities as training data for input and training target in the training system, or ii) to process projection data to obtain correction projection data at first and second qualities, the system providing the correction projection data at the first and second quality as training data for input and training target in the training system.

In one aspect there is provided a system comprising a trained machine learning module for facilitating iterative reconstruction, in one or more steps, of imagery in image domain from measured projection data in projection domain, the module configured to:

receive i.a) input correction image data, based on back-projected error projection data that represents a deviation between measured projection data and estimated projection data, or ii.a) input error projection data, based on a deviation between measured projection data and estimated projection data, the estimated projection data obtained by forward-projection into projection domain of a current image reconstructed at a given iteration step; and
predict, i.b) based on the input correction image data, output correction image data for correction of the said current image to obtain a new image or ii.b) predict, based on the input error projection data, output error projection data back-projectionable into correction image data for updating the said current image into a new image.

In another aspect there is provided a method for facilitating an iterative reconstruction operation, wherein, in one or more steps, imagery in image domain is reconstructable from measured projection data in projection domain, comprising:

receiving input correction data generated in the said iterative reconstruction operation,
by a trained machine learning module, predicting, based on the input correction data, output correction data, and to

providing the said output correction data for facilitating correcting a current image, as reconstructed in a given step, into a new image.

In another aspect there is provided a method for iterative reconstruction, wherein in one or more steps, imagery in image domain is reconstructed from projection data in projection domain, comprising:

forward-projecting a current image at a given iteration step into projection domain to obtain estimated projection data;
establishing projection error data as a deviation, if any, between the projection data and the estimated projection data, and, if there is,
back-projecting the projection error data into image domain to obtain input correction data;
by a trained machine learning module, computing, based on the input correction data, output correction image data; and
applying the output correction data to the current image to update the current image into a new image.

In another aspect there is provided a method for iterative reconstruction, wherein in one or more steps, imagery in image domain is reconstructed from projection data in projection domain, comprising:

forward-projecting a current image at a given iteration step into projection domain to obtain estimated projection data;
establishing input correction data as a deviation, if any, between the projection data and the estimated projection data, and, if any,
by a trained machine learning module, computing, based on the input correction data, output correction data; and
back-projecting the output correction data into image domain to obtain correction image data; and
applying the correction image data to the current image to update the current image into a new image.

In the above, the trained machine learning module may be exchanged for each, at least one, or some iteration step(s), such as may be done in CT. However, it also envisaged herein to retain the same module until conclusion of the iteration, such as may be done in nuclear tomographic imaging.
In another aspect there is provided a method of training, based on training data, a machine learning module as per any one of the above mentioned embodiments or aspects.
In another aspect there is provided a method of generating training data for use in a training a machine learning module, comprising:

i) processing projection data to obtain correction image data at first and second quality, the second quality being higher than the first quality, and

providing the correction image data at the first and second qualities as training data for input and training target in a training system, or
ii) processing projection data to obtain correction projection data at first and second qualities, and
providing the correction projection data at the first and second quality as training data for input and training target in a training system.

The "data quality" or "first and second (data) quality" may relate to data/image quality or levels thereof. In particular, image quality includes noise, artifact and resolution or other measurable quality of concern. The reduction of noise level is envisaged herein in particular, but so is a reduction of corruption by artifacts and/or increasing/maintain resolution.
The updater or updating operation referred to above to obtain the new image, may use an arithmetic operation that is similar to the arithmetic comparator operation of comparator. The correction data in image domain-sided or projection domain-sided embodiments may be applied to the current image multiplicatively or additively or in a combination thereof, as desired. In embodiments, a voxel/pixel-wise subtraction or addition is performed. Alternatively, the correction operation is done multiplicatively by multiplying or dividing voxel-wise the current image with a set of correction factors included in the correction data.
In another aspect there is provided a computer program element, which, when being executed by at least one processing unit, is adapted to cause the processing unit to perform any of the above mentioned methods.
In another aspect there is provided a computer readable medium having stored thereon the said program element or having stored therein the said synthesized low or high IQ imagery.
The principles described herein may be used more general to improve data quality in the correction data, for example image quality (IQ) in image domain. In image domain, the data quality includes image quality. The image qualities that may be improved are not confined to noise, but may include improving (increasing) resolution and/or reducing image artifact corruption. Thus, the machine learning approach may be used herein to improve resolution and/or reduce image artifacts in correction data in image domain. Such or similar qualities may be improved for correction data in projection domain also. In particular, resolution of the correction data may be adapted to that of a given voxelation ("image matrix"), that is, the spatial definition of voxel positions in the image domain.

In this disclosure, reference to "*noise level*" (or more general level of data quality) is not restricted to point data, but also includes range data, such as a predefined range of noise levels. A first such range [r1,r2] is said to be lower than a second range [s1,s2] if their respective midpoints are related as $(r1+r2)/2 < (s1+s2)/2$. The noise level or quality (such as image quality) may be defined per neighborhood for each location (pixel or voxel) in the data, or an average noise level may be defined for the whole image/data or a part thereof.

An "*iterative reconstruction algorithm*" is one where the computation of individual image element values does involve iterative steps. Frequently the iteration proceeds alternately in a sequence of forward and backward projection operations in order to ensure convergence of iteratively synthesized (artificially created) projection images towards the actually measured set of projection images. In general, iterative reconstruction algorithms are computationally more expensive than direct inversion reconstruction algorithm but may have the benefit of higher signal to noise ratio or higher image quality.

An iterative reconstruction algorithm is called "*algebraic*" if it does not use statistical information about the measurement process or device such as the detector used for the image acquisition of the projection images.

An iterative reconstruction algorithm is called "*statistical*" (SIR - statistical iterative reconstruction) if it uses, for the computation of the reconstructed image, statistical information or statistical model(s) to capture or model characteristics (such as noise) about the measurement process or device, in particular the detector, used for the image acquisition of the projection images.

In general, a "*machine learning component or module*" is a computerized arrangement that implements a machine learning ("ML") algorithm. The algorithm is configured to perform a task. The ML algorithm may be based on an ML model whose parameters are adjusted by the ML algorithm in a training phase based on training data. In an ML algorithm, task performance generally improves measurably over time, the more (new and sufficiently varied and representative) training data is used in training for improved training experience. The performance may be measured by objective tests when feeding the trained model with test data and evaluating the output. The performance may be defined by requiring a certain error rate to be achieved for the given test data. See T. M. Mitchell, "Machine Learning", page 2, section 1.1, McGraw-Hill, 1997. The task of main interest herein is to improve data/image quality, such as to reduce noise in correction data generated during execution of an interactive reconstruction algorithm.

BRIEF DESCRIPTION OF THE DRAWINGS

Exemplary embodiments of the invention will now be described with reference to the following drawings wherein:

Figure 1 shows a block diagram of a tomographic imaging arrangement;
Figure 2 shows a block diagram of a data processor for tomographic imaging according to one embodiment;
Figure 3 shows a block diagram of a data processor for tomographic imaging according to a further embodiment;
Figure 4 shows a flow chart of a computer implemented method for data processing for tomographic imaging according to a first embodiment;
Figure 5 shows a flow chart of a computer implemented method for data processing for tomographic imaging according to a further embodiment;
Figure 6 shows a block diagram of a machine learning model;
Figure 7 illustrates the concept of a receptive field of an artificial neural network of the convolutional type;
Figure 8 shows a block diagram of a training system for training a machine learning model; and
Figure 9 shows a flow chart of a computed implemented method for generating training data and for training a machine learning model.

DETAILED DESCRIPTION OF EMBODIMENTS

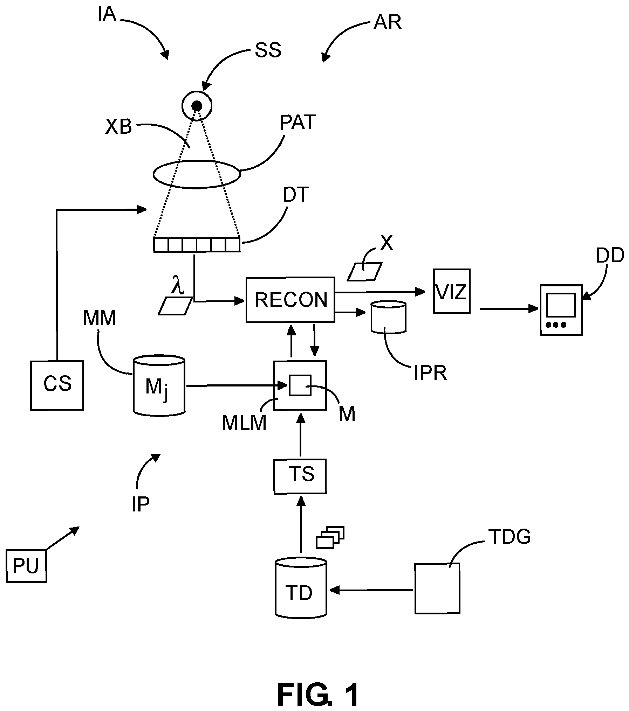

With reference to Figure 1, there is shown a computerized imaging arrangement AR. The arrangement AR comprises, in embodiments, an imaging apparatus IA and a data processing system IP (referred to herein as the "data processor") to support tomographic imaging. Very briefly, the data processor IP transforms data supplied by the imager IA into cross-sectional imagery X. The cross-sectional imagery X may be displayed on a display DD, may be stored in an image repository IPR, or may be otherwise processed.

The data processor IP as proposed herein is capable of producing imagery with enhanced image quality, such as reduced noise or higher contrast-to-noise ratio (CNR). The data to be transformed by data processor IP may be supplied direct by the imaging apparatus IA, or may be retrieved from an image memory. The data processor IP produces the enhanced imagery with low latency thanks to a booster component CDD as will be described in more detail below.

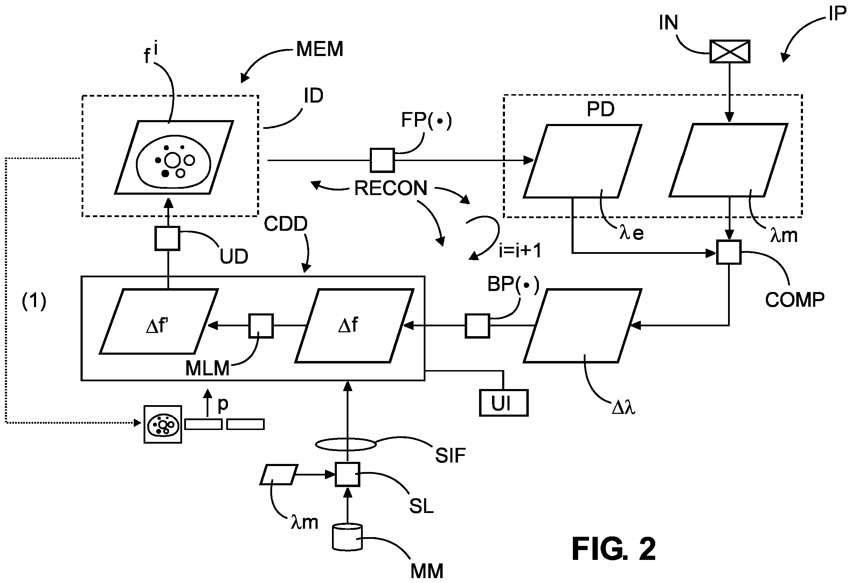

The data processor IP includes in some embodiments a trained machine learning module MLM. The module MLM may be implemented by or may include a machine learning model M trained by a training system TS based on training data TD. The imaging apparatus IA (sometimes referred to herein simply as the "imager") is preferably envisaged herein for medical purposes and is operable to acquire one or more images of a patient PAT. Broadly, the imaging apparatus comprises a signal source SS to generate an interrogating signal XB. The interrogating signal XB interacts with tissue in patient PAT and is thereby modified. The modified signal is then detected by a detection unit DT. The detected signals, such as intensity values, form detector raw data or projection imagery. Projection imagery may be of interest in its own right, but at times the projection imagery is further processed by a reconstruction module RECON to produce reconstructed imagery X, to be explained in more detail below at Figure 2.

The imager IA envisaged herein may be configured for structural or functional imaging. A range of imaging modalities is envisaged herein such as transmission imaging and emission imaging or others, such as ultrasound (US) imaging. For instance, in transmission imaging, such as x-ray based imaging, the signal source SS is an x-ray tube and the interrogating signal is an x-ray beam XB generated by the tube SS. In this embodiment, the modified x-ray beam impinges on X-ray sensitive pixels of the detection unit DT. The X-ray sensitive detector DT registers the impinging radiation as a distribution of intensity values. The registered intensity values form projection data $\lambda$. The X-ray projection data $\lambda$, although sometimes useful in their own right such as in x-ray radiography, may then be transformed into cross-sectional images by the reconstruction module RECON. Such a transformation is done for example in X-ray based CT imaging. Specifically, the reconstruction module RECON applies a reconstruction algorithm to the projection imagery, such as filtered back- projection or other algorithms. A cross-sectional image forms a 2D image in 3D space. In CT, a plurality of such cross-sectional images may be reconstructed from different sets of projection images to obtain a 3D image volume.

In MRI imaging, the detection unit is formed from coils, that are capable of picking up radiofrequency signals that represent the projection imagery, from which MRI cross-sectional images may be reconstructed by MRI reconstruction algorithms.

The X-ray imagery in CT or radiography represents structural details of the patient's anatomy. In emission imaging, such as PET or SPECT, the signal source SS may reside inside the patient in form of a previously administered radioactive tracer substance. Nuclear events caused by the tracer substance are then registered as projection images at a PET/SPECT detector DT arranged in a detector ring around the patient. A PET/SPECT reconstruction algorithm is then applied to obtain reconstructed PET/SPECT imagery that represents functional details of processes inside the patient, such as metabolic processes.

The imaging apparatus IA is controlled by an operator from an operator console CS. The projection data $\lambda$ produced by the apparatus IA, or retrieved from a storage, is received by the data processor IP at its interface IN, through wired or wireless communication means for example. The projection data $\lambda$ may be received directly from the imaging apparatus IA, or may be retrieved from memory where the data is stored after acquisition. The enhanced output imagery X may be mapped on a suitable grey value or color palette and may be visualized by a visualizer VIZ on a display device DD. The high IQ imagery X produced by the data processor IP can better assist a diagnostician in in ascertaining even finer, small scale structures, thanks to low noise of output cross-sectional image X.

The data processor for image enhancement IP may be run on one or more general purpose computing unit(s) PU. The computing unit PU may be communicatively coupled to the imaging apparatus or to the imaging repository IRP. In other embodiments the data processor IP is integrated into the imaging apparatus IA. The data processor IP may be integrated into the console CS. The data processor IP may be arranged in hardware or software, or in a combination thereof. Hardware implementations may include suitably programmed circuitry, such as a microprocessor or microcontroller, an FGPA or other general purposes circuitry. Hard coded circuity is also envisaged herein such as an ASICS or on-chip system, or other. A dedicated processor, such GPU (graphical processing unit), may be used.

Generally, a tomographic image reconstruction algorithm that is run by the reconstructor RECON implements a mapping from projection space into image space. In other words, reconstruction algorithms transform projection measurements/ line integrals/sinograms as supplied by the scanner IA into a slice or trans-axial image or volume image of an object in image space/image domain. Image domain is the portion of 3D space formed by the scanner IA's field of view (FoV) or bore. Conceptually, image domain is made up from 3D image elements such as voxels. A reconstruction algorithm populates the voxel positions with image values to build up the image. Reconstruction algorithms may utilize two transformation operations: One such transformation operation is from projection space into image space. This is also referred to as a backward projection, whereas the other operation is in the inverse direction from image domain into projection domain. This other operation is a forward projection. Plural cross-sectional images along a longitudinal axis of the patient (z-axis) together define an image volume. However, providing merely of a single trans-axial image X, rather than plural ones forming the said volume, is also envisaged.

The tomographic reconstruction algorithms as envisaged herein can be formulated as an iterative procedure for improving an objective function. Specifically, the procedure may be formulated in terms of optimization, in particular minimization, of a cost function. The cost function measures how well the estimated imagery in image domain provided during the iterations matches the actually observed projection measurements λ. A system matrix may be used to forward-project the reconstructed imagery into the projection domain and to compare this forward projection with the actually measured projection data λ. A deviation between the actually measured data λ and the forward projection as per the system matrix can be quantified by the cost function. In the iterations the imagery in image domain is adapted to reduce the cost function $q$, the algorithm thus converging towards the correct imagery. A dual formulation of the above described optimization is also contemplated which includes a maximization of a utility function.

In more detail, an iterative emission or transmission or MRI or other tomographic imaging reconstruction algorithm can be described as follows (excluding any attenuation correction for simplicity):

$$\lambda_e = FP[\dot{f}^i] \qquad (1)$$

$$f_i^{\ j} = BP\left(\lambda_e, \lambda m\right) \qquad (2)$$

$$f_{i+1}^{\ j} = G\left(f_i^{\ j}\right) \qquad (3)$$

wherein:

λe is estimated projection data, such as in list or frame/sinogram mode/format;
λm is projection data measured at detection device DT;
$FP$ is a forward projection operator and may be implemented as a matrix, sometime referred to as a system matrix, that describes a forward projection from image domain into projection domain;
$BP$ is a backward projection operator that estimates voxel values from projections;
$f^i$ is the $i$-th voxel in the imagery in image domain to be reconstructed;
$G$ is an update function that updates voxels $f$ during the iterations i.

The nature of $G$ depends on the optimization algorithm used and is implemented by an updater UD module, which will be explained in more detail below. Embodiments of G include update functions based on any one or more of the following numerical methods or techniques: gradient descent, stochastic gradient method, conjugate gradient, Nelder-Mead expectation maximization (EM), maximum likelihood methods, or any other. The goal in the said optimization is to adjust the voxel values to that the residue as per cost function $q = \|\lambda_m - FP[f^i]\|$ becomes sufficiently small, for example drops under a pre-defined threshold. $\|.\|$ is a suitable similarity measure, such as Euclidean, least squares, or some suitable $L_p$ norm.

As pertains to nuclear imaging, the reconstruction operation (1)-(3) may be done in list-mode or in frame or sinogram mode.

The system matrix $FP$ may be computed as a one-off beforehand, or on the fly, during reconstruction. In the latter case, there is no need to necessarily hold the whole of the matrix in memory. Only parts of the system matrix are ever computed when required during the reconstruction, to save memory space.

Iterative reconstruction schemes as may be used herein are described in W. Wang "Systematic and Distributed Time-of-Flight List Mode PET Reconstruction", published in "2006 IEEE Nuclear Science Symposium Conference Record", 2006, pp 1715-1722. Similar schemes exist or CT, MRT, OCT and other tomographic imaging modalities.

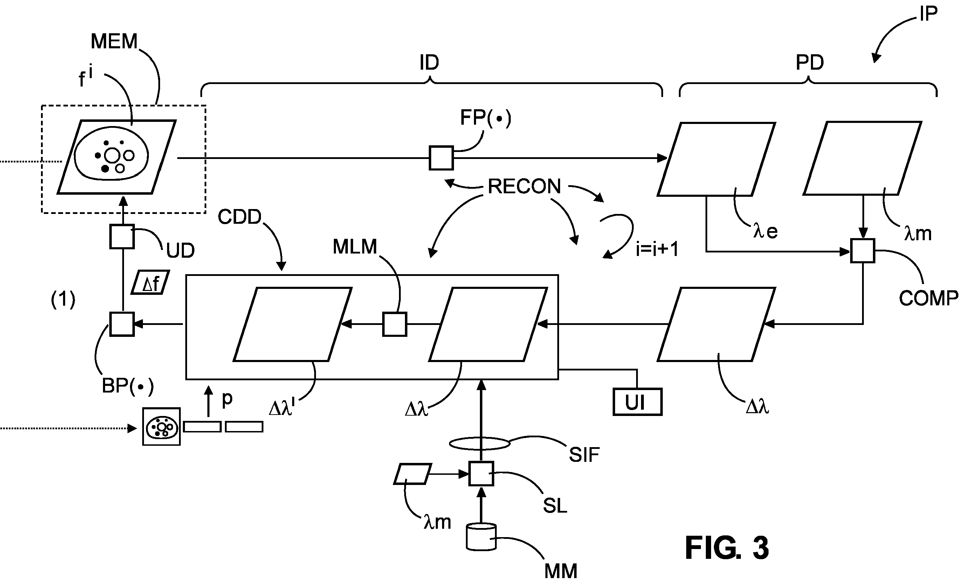

Reference is now made to the block diagrams of Figures 2, 3 where operation of the data processor system IP is explained in more detail. Two principal embodiments are envisaged where the above mentioned booster component CDD of processor system IP is operable in either image domain ID (Figure 2) or in projection domain PD (Figure 3).

In general, the data processor IP includes the reconstructor RECON configured for iterative reconstruction. Reconstructor RECON includes a forward projector component FP and a back projector component BP. The forward projector FP implements the forward projection operation whilst the back projector BP implements the back projection operation, such as at eqs (1)-(3). In general, the forward projector FP computes line integrals along different projection directions and across the image values in image domain. Converse thereto, the back projector BP attempts to estimate voxel values in image domain given projection data in projection domain.

The reconstructor may further include as components a comparator COMP and the said updater UD. The reconstructor RECON includes the booster component CDD or is least co-operative therewith. As will be described below, during the course of the iterative reconstruction operation, certain correction data is generated, and this is processed by the booster component CDD to facilitate quicker convergence to a low noise final result. Function and operation of the said components will be explained in more detail below.

A single computational entity may implement the data processor IP and the booster component CDD. The data processor IP may include the booster component CDD. Alternatively, a distributed architecture is used. The data processor IP and the booster component CDD are implemented on separate physical entities communicatively coupled to exchange data. The coupling may be implemented by a communication network that may be wired, wireless or is partly both. As mentioned earlier, the booster component CDD which may also be referred to herein as a correction data determiner CDD, for reasons that will become apparent shortly. The correction data determiner CDD may be implemented by, or may at least include, the above mentioned machine learning module MLM.

In model-based embodiments, the machine learning module MLM includes a machine learning model M, trained on the above mentioned training data. Model-based implementations may be preferred herein but that is not to say that non-model or "model-free" implementations are excluded herein. The correction data determiner CDD may be implemented by said model M.

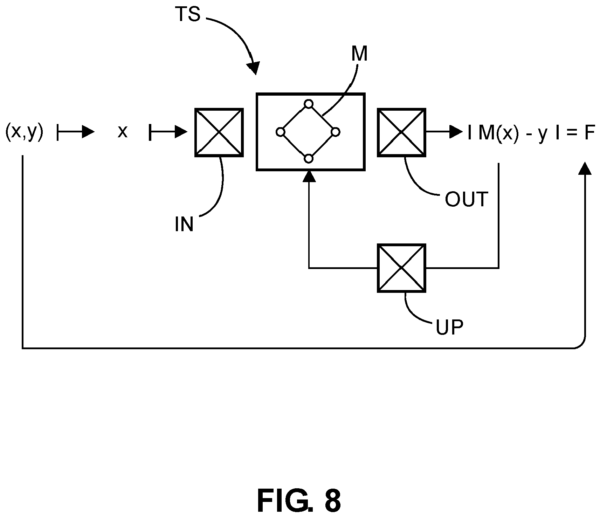

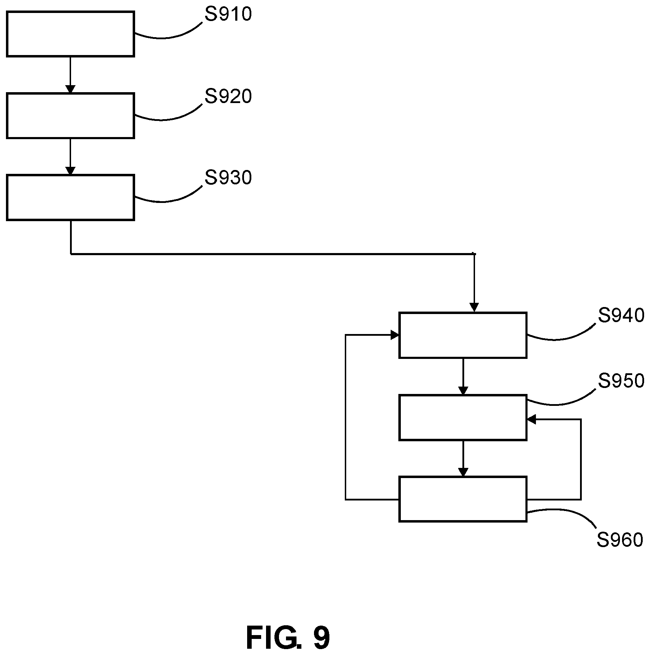

In machine learning embodiments of the correction data determiner CDD, two operational phases may be distinguished herein: a training phase and a deployment phase. The training phase will be explained in more detail further below at Figures 8,9. The training phase may also be referred to as the learning phase, although herein the term training will be used. The training phase includes a computational procedure, referred to as training or learning, where parameters of the model M are adjusted based on training data. The said procedure may be based on a training or leaning algorithm. Once training phase concludes, the model M can then be used as correction data determiner CDD during deployment. In deployment the trained model may be used during clinical practice to produce in a more efficient manner enhanced reconstructed imagery. The learning phase may be done one off operation. Alternatively, in a dynamic learning setup, the training phase may be repeatedly re-entered into, once new training data becomes available. The model M may thus be readjusted given the new training data. In deployment or testing, the model M is made to process input data not previously "seen", that is, data that was not part of the training or testing data set used in training or testing, respectively.

Operation of the image domain-sided embodiment of the data processor IP will now be explained in more detail with reference to Figure 2. For present purposes it is assumed that the machine learning model M has been sufficiently trained for deployment. Sufficiency of training can be established by having the trained model M process training data and by examining the test output.

The reconstructor RECON implements preferably an iterative reconstruction operation where, starting from an initial image in image domain, a final image is computed. The final image is also in image domain. The final image may be output for use by the user, for example may be displayed as a cross sectional view of the region of interest on the display device, may be stored in an image memory, or may be otherwise processed. The final image is generated by the reconstructor RECON based on projection data $\lambda_m$ as measured at by detector DT during projection data acquisition.

The reconstruction operation produces, in one or more iteration steps starting from the initial image, a series of intermediate images to arrive at the final image after sufficient convergence has been detected or a stopping condition has been fulfilled. The latest intermediate image is the final image. The user may issue a halt signal to stop iteration and output the current intermediate image as the final image.

The initial image $f^0$ may be chosen arbitrarily. It may be formed for example as a 2D or 3D matrix with entries a constant value. The matrix entries represent voxel positions with image values ("voxel values") at said respective positions. Alternatively, the initial image may include an a priori distribution of voxel values that roughly match expected physical characteristics of the region of interest one wishes to image. A current image $f^i$ is loaded into memory. The current image $f^i$ is either a certain intermediate image, or is in fact, at an initial stage, the initial image. The reconstruction algorithm implemented by reconstructor RECON proceeds as follows. The forward projector FP forward projects the current image at the current iteration $i$ step into projection domain PD. The projection domain may be conceptualized as respective projection planes which represents the radiation sensitive surface of the detector DT at different projection directions/angles. This forward projection operation FP(.) produces an estimated projection image $\lambda_e$ in projection domain PD. The values of the projection image $\lambda_e$ obtained by forward projection operation FP(.) represent the respective line integrals of the values of the current image $f^i$ along the different projection directions. The estimated projection image $\lambda_e$ may differ from the actually measured projection data $\lambda_m$ as measured at the detector for the various projection direction.

The comparator COMP compares the two sets of projection data $\lambda_e$, $\lambda_m$ thereby generating error data $\Delta\lambda$. The comparison operation by comparator COMP may be done by any algebraic operation, for example by taking pixel-wise differences by subtraction or may be done by dividing/multiplying entries in the two sets of measurement data at corresponding locations. There is such a correspondence as the two sets have the same size so the two sets are in natural registry. Weighted algebraic operations to effect the comparison are also contemplated.

The correction data $\Delta\lambda$ so generated by the comparator COMP at the given iteration step i is then passed on to the backward projector BP that back projects the error data $\Delta\lambda$ from projection domain into image domain to obtain an error image $\Delta f$. In general, the backprojection operation BP(.) implemented by backprojector BP attempts to estimate entries for voxel positions of the error image $\Delta f$ in image domain, based on the available (projection) error data $\Delta\lambda$ in projection domain. The error image $\Delta f$ has preferably the same size in terms of voxel number and arrangement as the current image. However, in some embodiments the error image $\Delta f$ may be larger or smaller and may be scaled to size if required. If the error image $\Delta f$ smaller, it may be applied only locally, or may be used in a tiling operation at different locations across whole or parts of the current image as required.

As mentioned earlier, the iterative reconstruction procedure outlined above introduces itself noise contributions which have been found by Applicant to be dependent on the noise level present in the measured projection data $\Delta M$. The error image thus "inherits", as it were, this noise contribution in the projection data, an effect that may further mar the image quality of the final result. In order to reduce the noise level in the error image, the pre-trained machine learning model of the correction data determinate CDD is applied to the error image $\Delta F$ received at its input. The machine learning module MLM may be implemented for example as an artificial neural network NN, such as a convolutional neural network. The error image $\Delta f$ is applied to an input layer of corresponding dimension of the network M, and is then propagated therethrough to emerge at its output layer as output error image $\Delta f'$. The machine learning module, such as the artificial neural network M, has been configured by the training procedure to act as a noise reducer to the reduce noise level in the original input error image $\Delta f$. The output error image $\Delta f'$ includes in general lower noise contributions so has a lower noise level than the input error image $\Delta f$. The model is to configured so as to preserve the dimension of the error input image: the error input image and the error output image have the same size in terms number and spatial arrangement of their voxels. This can be ensured by configuring the input layer IL and the output layer OL of the network M to have the same size. The error input and output image are preferably 3D, but may also be 2D, for example if only a single cross sectional image at a single z position is to be reconstructed rather than an image volume.

The noise-reduced output error image $\Delta f'$ is then applied by the updater UD to the current image $f^i$ to produce an updated, new intermediate image $f^{i+1}$ which may then be used in the next iteration step $i+1$. That is, it now the new intermediate image $f^{i+1}$ that is now processed as described above, including forward projecting, etc, to so commence a new iteration cycle, and so forth. The output error image $\Delta f'$ is applied by the updater UD to the current image by any suitable algebraic operation is described above in relation to the comparator COMP. The output error image $\Delta f'$ is applied voxelwise to the current image. The error output image may thus be added to/subtracted from, or may be multiplied or divided into, the current image $f^i$ voxel-wisely. This updating or correction operation is well-defined as the current image and the error image have by definition the same size so there is natural registry.

The entries of the intermediate images produced during the iteration are expected to converge to the final result/final image. As mentioned earlier, once a stopping condition has been fulfilled or the user so requests, the iteration halts and the currently intermediate as resident in memory MEM is then output as the final image/result. The final image may then be rendered for display as mentioned above to support the user, or the final image may be stored or is otherwise processed as desired. One such stopping condition may be implemented by the comparator COMP: if the error in projection domain is found to be below as certain threshold, the new current image $f^{i+1}$ is output as the final image/result.

The output of the comparator COMP as explained above can thus be seen to represent a deviation, if any, between the two data sets, the measured and the estimated projection data $\lambda_m$, $\lambda_e$. As mentioned earlier, the level by which the noise reduction is achieved is largely dependent on the noise level already present in the measured projection data $\lambda_m$. Thus, for different procedures or different acquisitions, different levels of noise reduction may be required to achieve a suitably quick convergence with low noise corruption. To this end, it may be desirable to have a ML module memory MM that includes a plurality or a bank of different trained machine learning modules $MLM_i$, each trained on different training data to produce reductions to different noise levels.

In other words, the different modules $MLM_i$ as held in the memory MM may achieve noise reductions by different amount. Notably, it is not so that always the reduction by the largest amount is helpful as this may prolong the convergence. Much rather the amount by which the noise level is to be reduced by the machine learning model should correlate to the noise present in the current set of measured projection data AM. If there is high noise in the measured projection data $\lambda_m$, a module $MLM_j$ trained for noise reduction by a higher amount is required, as compared to projection data $\lambda_m$ with lower noise levels, where a module MLMk trained for noise reduction by lower amount is preferred.

So as to better tailor the image data processor IP to the noise level of a current set of measured projection data $\lambda_m$, a selection module SL or selector may be arranged. The selector SL may receive an input signal from the user through a user interface UI. The input signal may indicate the desired noise level reduction and the selector then locates in the ML module memory MM through an interface SIF the machine learning module $MLM_k$ that best corresponds to the user selected noise reduction amount. Alternatively, an automatic embodiment is also envisaged where the selector SL autonomously analyses the current set of measured projection data to establish the noise level present and the selects the best module accordingly from module memory MM. In general, noise contributions/level can be quantified by various computational techniques, as such known in the art such as statistical techniques. For example, in local patches in the projection data $\lambda_m$, a statistical variance or standard deviation or higher moments are computed to characterize the noise level. The statistical computations for noise level in the various patches may be combined to arrive at statistical noise level quantification for the data $\lambda_m$ as a whole. Other noise characterization procedures to characterize noise level may also be used herein. Standard Deviation and its square may be used to quantify noise. The variance can be measured in case a lot of noise realizations are available or may be predicted using a certain noise model, e.g. Poisson, Gaussian or other.

Whether user selected or automatically selected, the chosen machine learning module MLM is loaded into memory and is then ready to receive the correction image ΔF as described above. As will be described in more detail, some machine learning models, in particular convolutional networks include a receptive field RF that represents the amount of data processed for a given data location. Preferably, this receptive field size should be larger than an intermediate neighborhood of a given voxel size as chosen by the user before the acquisition. To this end the data processor IP may include a user interface UI that allows the user to select the receptive field to match the neighborhood's size of the considered voxels which may differ from imaging apparatus and detector equipment, etc.

The voxel size may be user selected and adjustable through a user interface (not shown) for example of the operator console CS of the imager IA. Voxel size may be a function of pixel size at the detector DL and desired slice thickness in image domain. The pixel size may define how in the detector logic the different readings are to be grouped or "binned", to compute a give pixel value in the projection data.

Referring now to the block diagram in Figure 3, this shows the projection domain-side embodiment for the data processor IP. Operation is very similar as in Figure 2 with like symbols and components indicated by like reference signs, only that now the back projector BP is arranged downstream of the machine learning module MLM. The MLM has been trained on projection data in projection domain, rather than on image data in image domain as in the MLM-embodiment of Figure 2. In more detail, in the Figure 3 embodiment, the error projection data is now not back projected into image domain to be then transformed by the machine learning module as in Figure 2, but in Figure 3 it is the error projection data $\Delta\lambda$ that is processed by the machine learning module MLM to produce noise reduced projection data $\Delta\lambda$' in projection domain. In Figure 3 it is this noise reduced projection data $\Delta\lambda$' that is then applied to back projector BP and back-projected into image domain to obtain the correction image $\Delta f$. The correction image $\Delta f$ is then applied by the updater UD to the current image $f^0$ as earlier described.

Preferably, in the embodiments of Figures 2,3, the manner in which the updater UD operates corresponds to the manner of operation of the compactor COMP. If the compactor COMP operates multiplicatively or additively, the updater operates multiplicatively or additively, respectively.

The selector component SL and the user interface UI for selection of the receptor field RF as a function of voxel size is as described above in Figure 2.

As can be seen, in the above two embodiments of Figures 2,3, certain correction data is generated, in Figure 2 the correction data $\Delta f$ is in image domain and in Figure 3 the correction data $\Delta\lambda$ is in projection domain. In each embodiment, the respectively configured machine learning module MLM is used to reduce noise in the correction data. The correction data determiner CDD thus boosts iterative reconstruction algorithm to facilitate rapid convergence to a low noise final image.

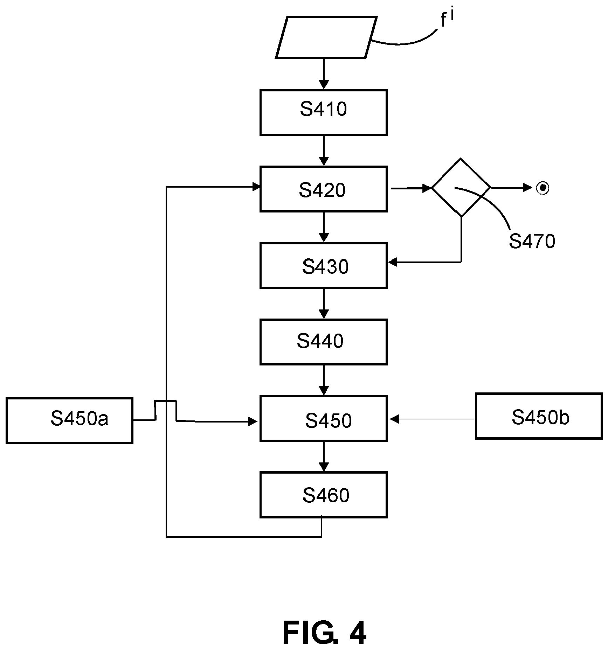

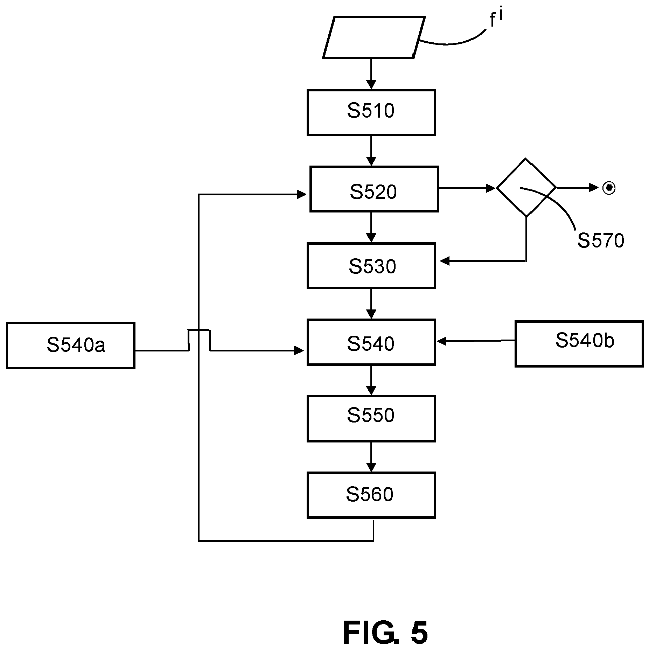

Reference is now made to Figures 4, 5 which show a respective flow chart of data processing methods for tomographic image generation. Whilst the methods may be used to implement the above described systems in Figures 2,3, it will be understood herein that the steps of the below methods are not necessarily tied to the architectures in Figures 1-3 as described above. The embodiments in Figures 4,5 correspond to the image domain- sided and projection domain-sided implementations of tomographic image generation by iterative reconstruction.

Turning first to the image domain-sided embodiment of the method as per Figure 4, at step S410 a current image resides or is loaded into a memory. The said current image may be an intermediate image $f^i$ as generated in an iterative reconstruction algorithm at a given iteration step, or the current image is an initial image $f^0$ as described above.

At step S420 the current image $f^i$ is forward projected into the projection domain to obtain estimated projection data.

At step S430 the estimated projection data is compared with measured projection data as detected at an X-ray sensitive detector during projection data acquisition in an imaging procedure. The comparison yields error projection data.

At step S440 the error projection data is back projected to image domain to obtain correction data in form of a correction image $\Delta f$.

At step S450 the correction image $\Delta f$ is applied to a trained machine learning module to obtain or predict an enhanced correction image $\Delta f$'. In particular, the so predicted correction image has a lower noise level than the initial correction image $\Delta f$. The amount of noise reduction is preferably a function of the noise in the measured projection data and the machine learning module is chosen accordingly beforehand from a bank of trained machine learning modules that are capable of noise level reductions by differing amounts.

At step S460 the current image $f^i$ is updated based on the enhanced correction image $\Delta f$'. In some such embodiments, the enhanced correction image $\Delta f$ is arithmetically applied to the current image to obtain a new current image which can be used for the next iteration step or may be output as a final result if sufficient convergence is established. The convergence may be established by re-running the forward-projection step S420 and the comparison step S430. If magnitude of the follow up error projection data so obtained is negligible as per a thresholding step S470, the new current image is output as the final image and process flow ends as indicated by the small dot to the right of box S470. If the error is not negligible, that is, it exceeds the threshold used in step S470, the process flow continues on into the next iteration cycle, and so on.

The update step S460 may include voxel-wise multiplication, division, addition or subtraction, or any arithmetic combination thereof. The correction image and the enhanced correction image have the same size and the size corresponds to the current image f. In other words, rows and columns are of the same number, thus providing natural registration so that the voxels-wise update or comparison operation is well defined. Same is true for the comparison step S430 in that the estimated and measured projection data are of the same size, affording natural registration and the now pixel-wise application of the arithmetic operations is well defined.

In an optional previous step S450a, a user selection signal is received to identify the machine learning module used in step S450 from a plurality of previously trained machine learning models. The signal is indicative of a desired noise reduction amount. In this manner, the machine learning model may be so selected that achievable noise reduction amount corresponds to the noise level that is present in the original measured data.

In some embodiments, the machine learning model is an artificial neural network of the convolutional type ("CNN"). In such embodiments, there may be another optional step S450b, in which a size of a receptive field of the CNN model is chosen based on a size of voxel neighborhood. In particular, the size of the receptive field is chosen larger than an immediate neighborhood of a voxel size in image domain. The immediate neighborhood for any given voxel position comprises the eight voxel positions adjacent to the immediate neighborhood position. Larger neighborhoods extending and including the immediate neighborhood may also be defined and the receptive is preferably chosen accordingly larger still. The voxel size may be a function of pixel size at the detector and/or slice thickness for a given cross-sectional image reconstructable. The voxel-size may also be user adjustable. In such embodiments, the model memory MM may include a plurality of different machine learning models each trained with a different receptive field The machine learning models/modules in the bank MM may thus have a two-dimensional index, one index indicative of the achievable noise reduction, the other of the size of the receptive field. The user signal hence allows retrieving the model with sufficiently large receptive field given the set or user selected voxel size.

Turning now to the projection domain-sided embodiment of the method of tomographic image generation with iterative reconstruction, reference is now made to Figure 5.

At step S510 a current image $f^i$ as before is loaded or is resident in a memory.

At step S520 the current image $f^i$ is forward projected to obtain estimated projection data in projection domain.

At step S530 the two sets of projection data, the estimated one and the measured one, are then compared to derive error projection data $\Delta\lambda$.

At step S540 the error projection data $\Delta\lambda$ is applied to a machine learning module that transforms the error projection data $\Delta\lambda$ into enhanced error projection data $\Delta\lambda'$ with a lower noise level as compared to the original error projection data $\Delta\lambda$.

The enhanced error projection data $\Delta\lambda'$ is then backward projected at step S550 into image domain to obtain correction image $\Delta f$.

At step S560 the correction image $\Delta f$ is then applied to the current image to update this for a new image which can then be used for the next iteration step or may be output as final image depending on whether sufficient convergence is established at step S570 as explained above in connection with step S470 of Figure 4.

Alternatively, the iterations may be aborted on user request, or once another stopping condition is fulfilled. This applies to both embodiments in Figures 4 and 5.

As before in Figure 4, the machine learning model may be selected at optional step S540a to match the desired amount of noise reduction which may correspond to the original noise corruption in the measured projection image. Also as before in Figure 4, there may be an optional step S540b of selecting the machine learning module so that its receptive fields is larger than a size of an immediate neighborhood of a voxel in image domain. Either one or both of the selection at steps S540a,b and step SS450a,b of Figure 4 may be user initiated or fully automatic based on i) examining the noise contribution in the measured data and/or on ii) querying the current voxel size and slice thickness from the image system setting, respectively.

The specific module MLMj selected as the optional steps S450a, S540a based on the noise of the acquired raw data $\lambda_m$ at the beginning of the reconstruction, this module MLMj may be maintained throughout the iterations until conclusion and this is preferred as this makes the proposed system easy to administer. In each iteration, the once selected mode MLMj is applied to the correction data prior to updating the intermediate reconstructed image. In embodiments, the model may be selected once, and it is this single model that is maintained and used throughout the iterations until conclusion. Alternatively, , upon user request or automatically, the current model may be exchanged for another before conclusion. The model may be exchanged for each iteration or only at certain one or more cycles. Exchange of the model may be preferable for CT as different models may be used for different z positions for example.

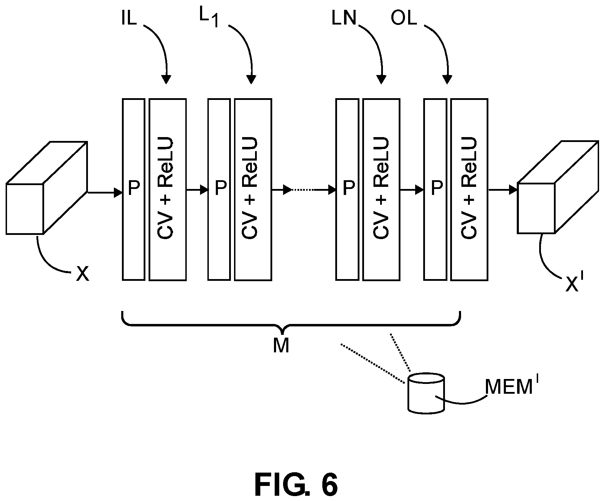

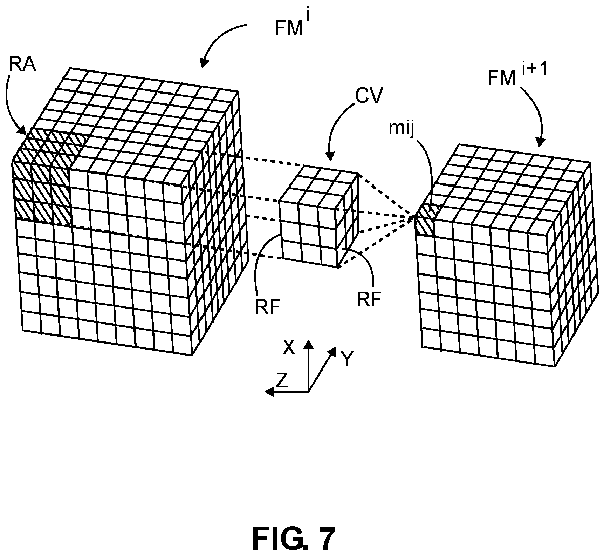

As indicated in Figures 2,3, the trained machine learning module at step S450, S540 may process not only the correction data $\Delta f$, $\Delta\lambda$, respectively but may also co-process additional prior *data p.* Processing such additional prior *data p* may further boost performance of the respective image domain-sided or projection domain-sided embodiments of machine learning modules MLM, MLM$_i$. The prior data $p$ may include data that is indicative of a desired convergence speed per voxel position or region. For example, the prior data may be provided in the embodiments of Figures 2,4 as estimated statistical count rates (or noise levels) of each respective voxel. This additional prior information facilitates steering the noise-reduction, i.e., convergence in each region or voxel neighbourhood. The above mentioned convergence speed is a consequence of a smoothing operation implemented by the machine learning model. The smoothing operation may be implemented by certain filter windows or kernels in convolutional neural networks for example. For those regions in the image domain where more information has been acquired in the projection data, the smoothing kernel learnt by the network M could be smaller (narrower), compared to regions where less information is available and stronger smoothing needs to be applied with, for example, a larger (wider) kernel. The filtering kernels/windows will be explored more fully below in connection with convolutional neural networks at Figures 6,7.

Turning now to the training phase in more detail, the machine learning modules (s) MLM, MLMi may be trained to reduce the noise level in the correction data. The correction data is either in mage domain (referred to as $\Delta f$ above) or in projection domain (referred to as $\Delta\lambda$. In image domain, the correction data $\Delta f$ may be formed as a 2D or 3D array of correction factors. In projection domain the correction data $\Delta\lambda$ includes the difference between measured projection data and estimated projection data. In general, correction data $\Delta\lambda$ may be represented as 3D array, with intensity values in 2D and one dimension of the angular projection direction. In both embodiments, the initial noise corruption in the respective correction data may be measured by computing the statistical variance $V1$. After application of the trained module MLM, MLMi one obtains correction data $\Delta f'$ $\Delta\lambda'$ of an improved (lower) statistical variance $V2$.

If a bank of plural such models is MLMi provided as in some embodiments, then each module MLMi is trained to transform into correction data having a specific, respective and different lower noise level. Thus, for each noise level, a respective MLMi module has been trained that reduces the noise level by a respective, different, predefined amount. However, as mentioned elsewhere, a bank of such models is not a necessity herein, as single model may be used instead in embodiments.

Figure 6 shows an architecture of a model M that may be used to implement such as ML module MLM.

Specifically, Figure 6 shows a schematic block diagram of a neural network M of the feed-forward type. The network M is preferably fully convolutional in that it does not include a fully connected layer, but fully connected layers are not exclude herein in other embodiments. Functionally, operation of the neural network M as used herein, is one of a regression, wherein the a-priori unknown latent relationship between high noise correction data and low correction data is learned. A given correction data array of the high noise type is regressed into its den-noised version.

The neural network NN is preferably a supervised machine learning model, which is implemented to solve the herein envisaged regressional correction data-to-correction data task e.g. by using a preferably a fully convolutional neural network.

The model M may be trained by a computerized training system TS. In training, the training system TS adapts an initial set of (model) parameters $\theta$ of the model M. The training data may be generated or may be procured from existing historical imagery as may be found in medical image database such as in PACS (picture archiving and communication system) or similar.

In training phase, prior to deployment phase, the model is trained by adapting its parameters based on the training data. The training phase may be a one off operation, or may repeated with new training data. The above mentioned components will now be described in more detail.

The machine learning model M may be stored in one (or more) computer memories MEM. The pre-trained CNN model M may be deployed as a machine learning component that may be run on a computing device PU, such as a desktop computer, a workstation, a laptop, etc. Preferably, to achieve good throughput, the computing device PU includes one or more processors (CPU) that support parallel computing, such as those of multi-core design. In one embodiment, GPU(s) (graphical processing units) are used.

With continued reference to Figure 6 and in yet more, the diagram shows a convolutional neural network M in a feed-forward architecture. The network M comprises a plurality of computational nodes arranged in layers in a cascaded fashion, with data flow proceeding from left to right and thus from layer to layer. Recurrent networks are not excluded herein.

In deployment, a 3D array X of correction data is applied to input layer IL. The 3D array is fed into model M at input layer IL, then propagates through a sequence of hidden layers L1-L3 (only three are shown, but there may be one or two, or more than three), to then emerge at an output layer OL as lower noise version X', having the same size as input X. The network M may be said to have a deep architecture because it has more than one hidden layers. In a feed-forward network, the "depth" is the number of hidden layers between input layer IL and output layer OL, whilst in recurrent networks the depth is the number of hidden layers, times the number of passes.

The layers of the network, and indeed the input and output imagery, and the input and output between hidden layers (referred to herein as feature maps), can be represented as two or higher dimensional matrices ("tensors") for computational and memory allocation efficiency. The input array X may be represented as a 3D matrix with dimensions x, y, z for embodiments Figures 2,4 or as $(x,y,\alpha)$ for projection domain data in embodiments Figures 3,5. The input data X thus forms a general a 3D-dimensional matrix, with height, width and depth.

Preferably, the hidden layers include a sequence of convolutional layers, represented herein as layers $L_1$-$L_{N-k,k>1}$. The number of convolutional layers is at least one, such as 3 or 5 or any other number. The number may run into double-digit figures.

In embodiments, downstream of the sequence of convolutional layers there may be one or more fully connected layers but this is not necessarily the case in all embodiments and indeed preferably no fully connected layer is used in the architecture envisaged herein in embodiments.

Each hidden $L_m$ layer and the input layer IL implements one or more convolutional operators CV. Each layer $L_m$ may implement the same number of convolution operators CV or the number may differ for some or all layers.

A convolutional operator CV implements a convolutional operation to be performed on its respective input. The convolutional operator may be conceptualized as a convolutional kernel. It may be implemented as a matrix including entries that form filter elements referred to herein as weights $\theta$. It is in particular these weights that are adjusted in the learning phase. The first layer IL processes, by way of its one or more convolutional operators, the input volume V. Feature maps FM are the outputs of convolutional layers, one feature map for each convolutional operator in a layer. The feature map of an earlier layer is then input into the next layer to produce feature maps $FM^i$, $FM^{i+1}$ of a higher generation, and so forth until the last layer OL combines all feature maps into the output correction data X'. The last combiner layer may also be realized as convolution that provides the denoised correction data X's estimate as an output single feature map as having the same size as the input array X.

The convolutional operators in the input layer IL and some or all hidden layers, are preferably 3D. That is, there is convolution across the spatial dimensions, to better account for spatial correlations in all 3 spatial dimensions.

A convolutional operator CV in a convolutional layer is distinguished from a fully connected layer in that an entry in the output feature map of a convolutional layer is not a combination of all nodes received as input of that layer. In other words, the convolutional kernel is only applied to sub-sets of the input array X, or to the feature map as received from an earlier convolutional layer. The sub-sets (also referred to herein as convolutional windows or kernels) are different for each entry in the output feature map. The number of elements in the subset determines the size of the window or kernel. The operation of the convolution operator can thus be conceptualized as a "sliding" over the input, akin to a discrete filter kernel in a classical convolution operation known from classical signal processing. Hence the naming "convolutional layer". In a fully connected layer an output node is general obtained by processing all nodes of the input layer.

The stride of the convolutional operators can be chosen as one or greater than one. The stride defines how the sub-sets are chosen. A stride greater than one reduces the dimension of the feature map relative to the dimension of the input in that layer. A stride of one is preferred herein. In order to maintain the dimensioning of the feature maps to correspond to the dimension of the input imagery, a zero padding layer P is applied. This allows convolving even feature map entries situated at the edge of the processed feature map.

Reference is now made to Figure 7 which show more detail of the 3D convolutional operation as envisaged herein in embodiments. As mentioned earlier, for efficiency reasons the, input correction data X, the output correction data X', the feature maps and the convolutional operators themselves may each be represented as matrices. In particular, 3D dimensional matrices are envisaged herein. In particular, a kernel of the convolutional operator CV has a width X, a height Y and a depth Z as indicated by the coordinate system in Figure 7. In particular, the kernel of the convolutional operator is preferably envisaged herein as a 3D kernel, so has in particular a depth Z greater than 1, for instance, two, three or more.

More specifically, Figure 7 represents the convolutional operation of convolutional operator CV in the first layer where the correction data array X is processed to produce a first generation feature map $FM = FM^1$. Similar convolutional processing is applied to feature maps further downstream in the cascaded layers where feature map $FM^i$ is convolved into feature map $FM^{i+1}$ of the next generation and so on. Each convolutional operator CV may be defined by its kernel (size) which is represented in Figure 7 as a small cube of example size 3x3x3. For each neural node $m_{ij}$ of in the output feature map, the convolutional operator CV acts on the above mentioned sub-set, or region of action RA, in the input block V. In other words, in the input layer IL of the neural network NN, a convolutional operator CV maps a plurality of voxels that form the region of action RA, a sub-set of block X, into a single node $m_{ij}$ of the feature map FM. Different feature map nodes are processed from different sub-sets RA to build up the whole feature map. The function applied by the kernel to build up each feature map node of a k-th generation feature map may be written as $$m_{ij}^k = f(W * z),$$ where $f$ can be any suitable function, such as a linear function, Symbol "z" is a voxel of the input data or is a node in an earlier feature map $FM^{k-1}$ in the respective region of action RA. Symbol "*" indicates the convolutional operator, and $W$ a set of weights used in the convolution.

The number of voxels of the input array X so processed per output node $m_{ij}$ describes the size of receptive field RF of the neural network for the unit $m_{ij}$ at this layer and is determined by the kernel size, stride and paddings of all convolution operators CV preceding this layer, where $m_{ij}$ is located. More particularly, a local receptive field of the convolutional neural network (CNN) is the size of the region of action RA of the input array X, which "seen" i.e. processed to determine a given unit $m_{ij}$ of the output array X'. For example, as shown schematically in Figure 7 the kernel of the convolutional operator has size 3x3x3 numbers which results in a local receptive field RF of size 3x3x3 for this single convolution operation.

Because of the cascaded nature of the CNN, the receptive field grows with the depth of the layer at which it operates as $m_{ij}^k$ for k>1 is a function of an ever larger number of voxels. It can hence be said that model M has a global receptive field for the network M as a whole, as opposed to the local receptive field at each intermediate unit of the network at each (hidden) layer as described above at Figure 6. The global receptive field is thus a function of network depth and convolution window size, also referred to as region of action RA above. For best results, the depth of the network and the all convolutional operators CV that make up the CNN are tuned so that the the global RF is larger than the immediate neighborhood for a given voxel size: Thus one can chose larger convolution windows or a greater depth of the network. Rather than training separate networks beforehand for different receptive field sizes as mentioned earlier, it may also be possible to use a single initial "base" network architecture, and to adjust by user request through the UI or automatically the network depth or window size. For each such adjustment by user UI, the training in the new ML architecture needs to be rerun. Therefore, the plural models in the bank are generated on demand once the convolution window size(s) and/or network depth is specified, and hence the size of global receptive field RF, in view of the current voxel size in as per the current image system setting. The processor IP may automatically query though interface setting the said imaging system settings, and the RF of the model is adjusted or a suitable trained model is access from the bank so that the receptive field RF is larger than the current system voxel size.

It will be appreciated that the depth direction Z as shown in Figure 7 in general corresponds to the imaging axis, however, this may not necessarily be so for instance for reformatted volumes V as also envisage herein. Some or each convolutional filter in some or each layer $L_m$ may be combined with a non-linearity inducing layer, such as a RELU (rectified linear unit) operator as shown in Figure 6. The RELU layer applies a non-linear function, $f(z) = max(z, 0)$ to the output feature maps received from the respective convolutional filter kernels CV. The RELU layers adds a non-linear component to the network M. Other nonlinearity operators may be used instead, such as the sigmoid function or the tanh-function, or others still. Other layers than the ones shown can be combined with the convolutional layers in any combination, including deconvolutional layers, max-pooling layers P, drop-out layers and others, or such other layers may be used instead.

In any of the above described architectures for CNN-type model M, the totality of the weights $W$ for all convolutional/deconvolutional filter kernels of the CNN model M define a configuration of the machine learning model. The weights may differ for each layer and each layer may include plural convolutional operators some or each having a different set of kernels W. It is these weights W$j$ that are learned in a training phase, where index j runs over layers and convolutional operators therein. Once the training phase has concluded, the fully learned weights, together with the architecture in which the nodes are arranged, can be stored in memory MEM and can be used for deployment.

Instead of using the architecture as described above at Figure 6, other approaches, in particular multi-model approaches such as Generative Adversarial Networks ("GAN") are also envisaged herein in some embodiments. Two types of ML models, generally called the "generator" and the "discriminator" are adversarially coupled by means of a special cost function. The training set includes two categories of data, the said high and low noise correction data, not necessarily paired. A specimen from the high noise category is drawn, possibly at random, and the generator attempts to predict its low noise counterpart which is then passed to the discriminator for processing. The discriminator attempts to discriminate whether the low noise counterpart was drawn from the training data set of the low noise category or was indeed generated by the generator. The cost function is configured so as to favor parameters of the generator and discriminator networks so that the generator succeeds, on average at least, to mislead the discriminator whilst, adversarial thereto, the discriminator is to succeed on average in correctly discriminating the two data categories. The setup has been shown to converge to a statistical equilibrium at which point the generator is considered trained and can be used herein for deployment in iterative tomographic reconstruction. GANs have been described by I. Goodfellow et al in "Generative Adversarial Networks", available online on the arxiv-repository at arXiv: 1406.2661, submitted 10 June 2014.

The training aspects of the machine learning model M will be explained further below at Figures 8 and 9. The training may be a one-off operation or the previously trained model may be trained further when new training data becomes available.

Reference is now made to Figure 8 which shows a training system TS for training the parameters, i.e. the weights of machine learning model such as in a convolutional neural network as discussed in Figures 6,7 or other. The training data comprises pairs $k$ of data $(x_k, y_k)$. The training data comprises for each pair $k$ (the index $k$ is not related to the index used above to designate generation of feature maps), training input data $x_k$ and an associated target $y_k$. The training data is thus organized in pairs $k$ in particular for supervised learning schemes as mainly envisaged herein.

However, it should be noted that non-supervised learning schemes are not excluded herein.

The training input data $x_k$ may be obtained from historical image databases or image repositories. The targets $y_k$ or "ground truth" may represent examples of low noise correction data generated in previous iterative tomographic reconstructions from historical projection data (preferably for different patients), whereas the $x_k$ are correction data at higher noise level. It is not necessary herein that the pair $x_k, y_k$ represents the exact same anatomy for the same patient. Some imaging protocols may mandate different dosages and a PACS may be searched to find imagery for each such protocols to combine into a training pair.

In the training phase, an architecture of a machine learning model M, such as the shown CNN network in Figures 6,7 is pre-populated with initial set of weights. The weights $\theta$ of the model M represent a parameterization $M^\theta$, and it is the object of the training system TS to optimize and hence adapt the parameters $\theta$ based on the training data $(x_k, y_k)$ pairs. In other words, the learning can be formulized mathematically as an optimization scheme where a cost function $F$ is minimized although the dual formulation of maximizing a utility function may be used instead.

Assuming for now the paradigm of a cost function $F$, this measures the aggregated residue(s), that is, the error incurred between data estimated by the neural network model M and the targets as per some or all of the training data pairs $k$:

$$argmin_\theta F = \sum_k || M^\theta(x_k) - y_k || \qquad (4)$$

In eq (4) and below, function $M()$ denotes the result of the model M applied to input x. The cost function may be pixel/voxel-based, such as the L1 or L2 cost function. In training, the training input data $x_k$ of a training pair is propagated through the initialized network M. Specifically, the training input $x_k$ for a k-th pair is received at an input IL, passed through the model and is then output at output OL as output training data $M^\theta(x)$. A suitable measure $\| \bullet \|$ is used such as a $p$-norm, squared differences, or other, to measure the difference, also referred to herein as residue, between the actual training output $M^\theta(x_k)$ produced by the model M, and the desired target $y_k$. Any cost function and measure $\|.\|$ may be used that is suitable for regression tasks. In case the GAN setup is used, the cost function (4) is formulated in terms of cross-entropies and included two parts, one for the generator and for the discriminator as described by *Goodfellow et al* in the citer paper at page 3, eq(1).

The output training data $M(x_k)$ is an estimate for target $y_k$ associated with the applied input training image data $x_k$. In general, there is an error between this output $M(x_k)$ and the associated target $y_k$ of the presently considered k-th pair. An optimization scheme such as backward/forward propagation or other gradient based methods may then be used to adapt the parameters $\theta$ of the model M so as to decrease the residue for the considered pair $(x_k, y_k)$ or a subset of training pairs from the full training data set.

After one or more iterations in a first, inner, loop in which the parameters $\theta$ of the model are updated by training updater UP for the current pair $(x_k, y_k)$, the training system TS enters a second, an outer, loop where a next training data pair $x^{k+1}, y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, for example summed, residues of all the training pairs are considered up to the current pair, to improve the objective function. The aggregated residue can be formed by configuring the objective function $F$ as a sum of squared residues such as in eq. (4) of some or all considered residues for each pair. Other arithmetic combinations instead of sums of squares are also envisaged.

Optionally, one or more 3D batch normalization operators ("BN", not shown) may be used. The batch normalization operators may be integrated into the model M, for example coupled to one or more of the convolutional operator CV in a layer. BN operators allow mitigating vanishing gradient effects, the gradual reduction of gradient magnitude in the repeated forward and backward passes experienced during gradient-based learning algorithms in the learning phase of the model M. The 3D batch normalization operators BN may be used in training, but may also be used in deployment. As opposed to 2D batch normalization operators, the 3D batch normalization operators receive (mini-)batches of 3D data as input.

The generalized training system as shown in Figure 8 can be considered for all learning schemes, in particular supervised schemes. Unsupervised learning schemes may also be envisaged herein in alternative embodiments. GPUs may be used to implement the training system TS.

Reference is now made to Figure 9 which shows flow charts of a training data generation method and a training method to train an ML model M as described above, based on such or other training data. Both methods may be used in combination, but that is not a requirement herein as the generated training data may also be used of other purposes such as statistical analysis, visualization etc and the training data method may also be used with extant, historical data so the proposed generation method may not always be required herein.

Turning first to the training data generation mode, this method allows generating pairs of correction data sets, one set having lower noise level than the other. The method may be implemented by the training data generator TDG.

The earlier set forms the training input x, the later its target y. In general, each set of projection data, or in fact and set of measurements s of any sort, includes true signals t that are corrupted by noise contributions *n*. This can be thought of additively, where the measurement s = *t + n*. In noise reduction or de-noising one wishes to reduce *n,* or at least improve the ratio *t/n.* For the purposes of generating suitable pairs of correction data sets with different nose level to train the model M on, we propose to harness the following fact: in tomographic imaging, projection data includes different intensity measurements per projection direction. Usually, there are such measurement for an angular range of at least 180°. Usually measurements for the whole angular range is used in the iterative reconstruction. But the more measurements for some angles or angular ranges are left out, the more noisy the data generated by the iterative reconstruction will become. This hold not only true for the intermediate and final image, but also for the correction data generated during the iterations of the iterative reconstruction.

Broadly, the method processed as follows: in step S910, historical projection data generated by iterative reconstruction algorithms are identified and accessed. This can be done by formulating searches in image databases for earlier studies from previous patients or earlier studies for a given patient. The image databases may include a PACS (A picture archiving and communication system) in a HIS (hospital information system). Meta-data in header data of DICOM data or other structured format may be used to formulate the searches.

Preferably, such projection data for a range of different patients with different bio-characteristics are accessed to increase data variability so that the model M can be trained to generalize well, but in principle previous projection data for a single patient could suffice for present proposes and indeed have shown surprisingly good results when used as training data.

At step S920, pairs of correction data arrays $(x,y)_k$ at different noise levels are generated. Array *y* has a lower noise level locally or globally than the array x.

In step S930 the said pairs $(x,y)_k$ are made available as generated training data for training an ML model.

In more detail, step S920 can be implemented as follows: based on the historical protection data, two iterative reconstruction are run, one using u% of all projection data, the other only v%, with v < *u.* For example, *u* = 100%, and *v* = 50%. The respective correction data $\Delta f^v$, $\Delta f^u$ or $\Delta \lambda^v$, $\Delta^u$ are stored and paired up to form instances of the training data (x=$\Delta f^v$, y=$\Delta f^u$) or (x= $\Delta \lambda^u$, y=$\Delta \lambda$), depending on whether the model is to be trained is for image domain-sided or projection domain-sided deployment, respectively. This may be repeated for any combination of *(u,v)*. Preferably, for each pair *(u,v)*, plural such instances are generated for some or each patient *k:* ($x_k$=$\Delta f^v$, $y_k$=$\Delta f^u$) for image domain-sided deployment or ($x_k$= $\Delta \lambda^v$, $y_{k=}\Delta \lambda^u$) for projection domain-sided deployment. The correction data for each of the iterative reconstruction runs *k* is preferably stored after convergence has been detected at iteration cycle *i\**, but may be stored earlier than that *i<i\** if time pressed. Alternatively, the pairs are generated by running a single iterative reconstruction and storing one set of correction data at iteration cycle i and the other correction data at a later *cycle j>i.* The correction data at later cycle j has a lower noise level than the earlier correction data at earlier cycle i. Cycle *j* may be chosen when convergence set in, and i is chosen earlier at pre-convergence. The data at later cycle *j* is thus the target *y*, and the earlier correction data is the training input x associated with said *y*. Again, this may repeated for different patient data records.

The percentages *(u,v)* and cycles *(i,j)*, respectively may be understood herein as data generator design parameters. The difference in noise levels caused by the difference between data generator design parameters determines the amount of noise reduction to which the model for the respective choice of (u,v) and (i,j) will be trained.

Alternatively still, if the historical record happens to hold the correction data already, this may be used to form one part of the pair, and only one reconstruction is run for the second part, based on less projection data than was used when generating the historical correction data in the historical reconstruction run.

In addition to the pairs of two correction data sets at different noise levels, a third data item, namely the above mentioned additional prior data $p_k$, may be generated to obtain augmented pairs ($x_k$=($p_k$, $\Delta f^v$), $y_k$=$\Delta f^u$) or ($x_k$= ($p_k$,$\Delta \lambda^v$), yk=$\Delta \lambda^u$). Depending on which embodiment is used Figures 2,4 or Figures 3,5, the additional prior data $p_k$ is in image or projection domain. The said additional prior information $p_k$ could be provided by an intermediate or final estimate of the statistical information density distribution, e.g., the estimated number of detected decays in PET imaging. In CT, $p_k$ may be obtained by e.g. noise estimates.

The additional prior information $p_k$ helps the ML models to compute correction data that steer the convergence of the iterative reconstruction algorithms locally. The additional prior information $p_k$ has the same size as the correction data so is a 3D array. Each entry describes the desired noise level locally at the respective position.

If the additional prior information $p_k$ is used, this array can be combined with the 3D array for the correction data to form a multi-dimensional structure with the input layer of the CNN model M sized accordingly. The correction data and the prior information are thus processed by the network M jointly, in a multi-channel fashion. The convolutional operators CV may be dimensioned with a depth dimension to allow cross-channel processing, or the convolutional operators CV have no depth component so each channel, correction data and prior information, is convolved separately.

Turning now to the training method, this may be used with the above generated training data or with historical data, or with a mix of both.

In more detail, at step S940 training data is received in the form of pairs $(x_k, y_k)$. Each pair includes a training input $x_k$ and an associated target $y_k$. $x_k$ is correction data array at higher noise, and $y$ is the corresponding correction data array at lower noise. As before, "k" is and index for the specific data pair. Index "k" may in general correspond to different patients from whose records the training data has been collated.

At step S950, the training input $x_k$ is applied to an initialized machine learning model M to produce a training output.

A deviation, or residue, of the training output $M(x_k)$ from the associated target $y_k$ is quantified by a cost function $F$. One or more parameters of the model are adapted at step S960 in one or more iterations in an inner loop to improve the cost function. For instance, the model parameters are adapted to decrease residues as measured by the cost function. The parameters include in particular weights $W$ of the convolutional operators CV.

The training method then returns in an outer loop to step S940 where the next pair of training data $k+1$ is fed in. In step S950, the parameters of the model M are adapted so that the aggregated residues of all pairs considered are decreased, in particular minimized. The cost function quantifies the aggregated residues. Forward-backward propagation or similar gradient-based techniques may be used in the inner loop.

More generally, the parameters of the model M are adjusted to improve objective function $F$ which is either a cost function or a utility function. In embodiments, the cost function is configured to the measure the aggregated residues. In embodiments the aggregation of residues is implemented by summation over all or some residues for all pairs considered. The method may be implemented on one or more general-purpose processing units TS, preferably having processors capable for parallel processing to speed up the training. Rather than processing the training data pairs linearly, sets if pairs may be processed in parallel or "batches". The outer loop thus loops over batches. In an extreme case, all training data may be processed at once in which case there is no outer loop.

Whilst the correction data determiner CDD and the methods herein have been described above with main reference to noise reduction, the principles described above may also be used for improving other data qualities, in particular other image quality, such as improving resolution and/or reducing image artifacts. In such embodiments, for training, the target $y_k$ may be chosen as correction data with higher resolution and/or with lower artifact corruption than resolution/artifact corruption in the associated training input $x_k$. In CT for example, there are artifacts due to beam hardening, scatter, motion, cone beam, helical, ring, and metal artifacts. The training data pairs $(x_k, y_k)$ may be readily supplied by having a human expert label the data accordingly. The different resolutions may be simulated by rebinning the projection data as described above and to run at least one new iterative reconstruction algorithm to obtain the high or low resolution correction data in the image generation method as described above at steps S910-S930. The training algorithm is as described above at Figures 8,9 for the embodiment of noise reduction, as an example of data/image quality improvement. In particular, with the proposed method and system, an resolution of the correction data may be adapted to that of a given voxelation of the image domain. GAN type setup may be used for resolution improvement or artifact reduction.

The components of the data processing system IPS may be implemented as one or more software modules, run on one or more general-purpose processing units PU such as a workstation associated with the imager XI, or on a server computer associated with a group of imagers.

Alternatively, some or all components of the image processing system IPS may be arranged in hardware such as a suitably programmed microcontroller or microprocessor, such an FPGA (field-programmable-gate-array) or as a hardwired IC chip, an application specific integrated circuitry (ASIC), integrated into the imaging system XI. In a further embodiment still, the image processing system IPS may be implemented in both, partly in software and partly in hardware.

The different components of the image processing system IPS may be implemented on a single data processing unit PU. Alternatively, some or more components are implemented on different processing units PU, possibly remotely arranged in a distributed architecture and connectable in a suitable communication network such as in a cloud setting or client-server setup, as a web-hosted service etc. This allows serving multiple geographically distributed imaging sites, either across a single medical facility or across multiple medical facilities.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Furthermore, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A system (CDD) comprising a trained machine learning module (MLM) for facilitating an iterative reconstruction operation, wherein, in one or more steps, imagery in image domain is reconstructable from measured projection data in projection domain, the module (MLM) configured to:

   receive input correction data generated in the said iterative reconstruction operation,
   predict, based on the input correction data, output correction data, and to
   provide the said output correction data for facilitating correcting a current image, as reconstructed in a given step, into a new image.

2. System of claim 1, wherein the input correction data is in image domain, based on back-projected error projection data, the error projection data representing a deviation between measured projection data and estimated projection data, and the estimated projection data obtained by forward-projection into projection domain of the current image.

3. System of claim 1, wherein the input correction data is in projection domain, based on a deviation between measured projection data and estimated projection data, the estimated projection data obtained by forward-projection into projection domain of the current image reconstructed at a given iteration step.

4. System of any one of preceding claims, wherein the module (MLM) acts as a data quality improver so that the new correction data has a higher quality than the input correction data.

5. System of claim 4, wherein the quality is one of noise, and the system comprises plural such machine learning modules (MLM$_j$), configured for a respective different noise reduction level.

6. System of claim 5, including a selector (SL) for receiving a selector signal to select one of the plural modules, based on a desired noise reduction level.

7. System of any one of the previous claims, wherein the, or at least one of the, plural machine learning modules (MLMj) includes an artificial neural network model (M).

8. System of claim 7, wherein the artificial neural network model (M) is a convolutional neural network.

9. System of any one of the previous claims, wherein the convolutional neural network has an effective receptive field (RF) larger than a neighborhood of a voxel in image domain or of a pixel in projection domain.

10. System of any one of the previous claims, the projection data measured by an imaging apparatus, the imaging apparatus being any one of: an X-ray imaging apparatus, a PET/SPECT imaging apparatus, and an MRI imaging apparatus.

11. System of any claims 4-10, wherein the data or image quality pertains to any one or more of: noise, resolution and image artifact.

12. A system (IP) for iterative reconstruction, in one or more steps, of imagery in image domain from projection data in projection domain, comprising:

memory (MEM) on which is stored a current image for a given iteration step;
a forward-projector (FP) to map the current image into projection domain to obtain estimated projection data;
a comparator (COMP) configured to establish projection error data as a deviation, if any, between the projection data and the estimated projection data, and, if there is,
a back-projector (BP) to back-project the projection error data into image domain to obtain the input correction data;
a correction data determiner (CDD), implemented as a trained machine learning module as per any one of claims 1-11, to compute, based on the input correction data, the output correction image data; and
an updater (UD) configured to apply the output correction data to the current image to update the current image into the new image.

13. A system (IP) for iterative reconstruction, in one or more steps, of imagery in image domain from projection data in projection domain, comprising:

memory (MEM) on which is stored a current image for a given iteration step;
a forward-projector (FP) to map the current image into projection domain to obtain estimated projection data;
a comparator (COMP) configured to establish input correction data as a deviation, if any, between the projection data and the estimated projection data, and, if any,
a correction data determiner (CDD), implemented as a trained machine learning module as per any one of claims 1-11, to compute, based on the input correction data, the output correction data; and
a back-projector (BP) configured to back-project the output correction data into image domain to obtain correction image data; and
an updater (UD) configured to apply the correction image data to the current image to update the current image into a new image.

14. Training system (TS) configured for training, based on training data, a machine learning module (MLM) as per any one of the previous claims.

15. System (TDG) for generating training data for use in a system as per claim 14, comprising an iterative reconstructor (RECON) configured i) to process projection data to obtain correction image data at first and second quality, the second quality being higher than the first quality, the system providing the correction image data at the first and second qualities as training data for input and training target in the training system, or ii) to process projection data to obtain correction projection data at first and second qualities, the system providing the correction projection data at the first and second quality as training data for input and training target in the training system.

16. Method for facilitating an iterative reconstruction operation, wherein, in one or more steps, imagery in image domain is reconstructable from measured projection data in projection domain, comprising:

   receiving input correction data generated in the said iterative reconstruction operation,
   by a trained machine learning module, predicting (S450, S540), based on the input correction data, output correction data, and to
   providing the said output correction data for facilitating correcting a current image, as reconstructed in a given step, into a new image.

17. Method of training (S940-S960), based on training data, a machine learning module (MLM) as per any one of the previous claims

18. Method of generating training data for use in a training a machine learning module, comprising:

   i) processing (S920) projection data to obtain correction image data at first and second quality, the second quality being higher than the first quality, and
   providing (S930) the correction image data at the first and second qualities as training data for input and training target in a training system, or
   ii) processing (S920) projection data to obtain correction projection data at first and second qualities, and
   providing (S930) the correction projection data at the first and second quality as training data for input and training target in a training system.

19. A computer program element, which, when being executed by at least one processing unit, is adapted to cause the processing unit to perform the method as per any one of claims 16-18.

20. At least one computer readable medium having stored thereon the program element of claim 19, or having stored thereon the training machine learning module as per any one of claims 1-14, 16 and 17.

**FIG. 1**

FIG. 2

**FIG. 3**

EP 4 080 459 A1

FIG. 4

**FIG. 5**

**FIG. 6**

**FIG. 7**

**FIG. 8**

FIG. 9

Europäisches
Patentamt

European
Patent Office

Office européen
des brevets

## EUROPEAN SEARCH REPORT

**Application Number**

EP 21 17 0069

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | "Designing a learning system" In: Mitchell Tom M.: "Machine Learning", 1997, McGraw-Hill, XP055849256, pages 5-14, * the whole document * | 14,17, 19,20 | INV. G06T11/00 |
| A | LISHUI CHENG ET AL: "Accelerated Iterative Image Reconstruction Using a Deep Learning Based Leapfrogging Strategy", 14TH INTERNATIONAL MEETING ON FULLY THREE-DIMENSIONAL IMAGE RECONSTRUCTION IN RADIOLOGY AND NUCLEAR MEDICINE, FULLY3D, XI'AN, CHINA , 18 June 2017 (2017-06-18), pages 715-720, XP040712872, Retrieved from the Internet: URL:http://www.fully3d.org/2017/index.html ?page=oral10_1 [retrieved on 2021-10-07] * the whole document * | 1-20 | |
| A | HANINGER STEFAN ET AL: "Deep Learning Acceleration of OS-SIRT in X-ray Cone-Beam Computed Tomography", 6TH INTERNATIONAL CONFERENCE ON IMAGE FORMATION IN X-RAY COMPUTED TOMOGRAPHY, 3 August 2020 (2020-08-03), XP055849196, * the whole document * | 1-20 | TECHNICAL FIELDS SEARCHED (IPC) G06T |
| A | US 2019/108441 A1 (THIBAULT JEAN-BAPTISTE [US] ET AL) 11 April 2019 (2019-04-11) * paragraphs [0023], [0031], [0051], [0062] * * figure 3 * | 1-20 | |

The present search report has been drawn up for all claims

| Place of search | Date of completion of the search | Examiner |
|---|---|---|
| Munich | 8 October 2021 | Werling, Alexander |

## ANNEX TO THE EUROPEAN SEARCH REPORT
## ON EUROPEAN PATENT APPLICATION NO.

EP 21 17 0069

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2021

| Patent document cited in search report | Publication date | Patent family member(s) | Publication date |
|---|---|---|---|
| US 2019108441 A1 | 11-04-2019 | CN 111492406 A<br>EP 3695382 A1<br>JP 2021502836 A<br>US 2019108441 A1<br>WO 2019074879 A1 | 04-08-2020<br>19-08-2020<br>04-02-2021<br>11-04-2019<br>18-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997, 2
- **W. WANG.** Systematic and Distributed Time-of-Flight List Mode PET Reconstruction. *2006 IEEE Nuclear Science Symposium Conference Record,* 2006, 1715-1722

- **I. GOODFELLOW et al.** *Generative Adversarial Networks,* 10 June 2014